# DEMANDE DE BREVET EUROPEEN

(11) **EP 3 478 002 A1**
(43) Date de publication de la demande: **01.05.2019**
(21) Numéro de dépôt: 18198307.3
(22) Date de dépôt: 02.10.2018
(51) Int. Cl.: H04W 48/18

(54) **DISPOSITIF DE COMMUNICATION POUR VÉHICULE COMPORTANT UNE PLURALITÉ DE MOYENS DE COMMUNICATION**

(30) Priorité: 27.10.2017 FR 1760187
(71) Demandeur: PSA Automobiles SA, 78300 Poissy (FR)
(72) Inventeur: FERNANDEZ, Antonio Eduardo, 36204 VIGO, (ES); FROMION, Alexandre, 92160 ANTONY (FR); KADIRI, El Khamis, 78640 NEAUPHLE LE CHATEAU (FR)

(57) **Abrégé**

L'invention concerne un dispositif de communication (104, 104') pour véhicule (102, 102'), comportant une pluralité de moyens de communication et une base de règles, ledit dispositif de communication étant configuré pour déterminer un moyen de communication à partir de ladite base de règle, caractérisé en ce qu'il est en outre configuré pour :
- Vérifier, auprès d'un serveur distant (103), si une mise à jour de la base de règles est disponible,
- Télécharger la base de règles mise à jour,
- Mettre à jour la base de règles avec la base de règles téléchargée.

## Description

L'invention concerne la transmission de données entre un véhicule et un serveur distant et plus particulièrement la détermination des moyens de communication permettant une telle transmission.

Il est connu de transmettre des données entre un véhicule et un serveur distant par l'intermédiaire de moyen de communication sans fils.

Il est par exemple connu d'utiliser un point d'accès wifi pour transférer des données depuis un véhicule vers un serveur. Par contre, ce moyen de connexion n'est pas toujours disponible

Il est aussi connu d'utiliser une connexion 3g ou 4g pour transférer des données depuis un véhicule vers un serveur. Par contre, ce moyen de connexion peut devenir couteux car généralement il est facturé en fonction du volume de données transféré.

On connait par le document US20110095905 un procédé permettant de sélectionner un moyen de communication en fonction de divers critères telles que la priorité des données à transmettre ou encore le coût de la communication.

Mais une telle solution ne permet pas de s'adapter à des changements ponctuels dans l'environnement du véhicule par exemple des problèmes de couverture réseau dus à une panne temporaire.

L'invention a donc pour but de proposer un procédé et un dispositif de communication pour véhicule permettant de s'adapter en fonction de l'environnement du véhicule.

Elle propose plus précisément à cet effet un dispositif de communication pour véhicule, comportant une pluralité de moyens de communication et une base de règles, ledit dispositif de communication étant configuré pour déterminer un moyen de communication à partir de ladite base de règle, caractérisé en ce qu'il est en outre configuré pour :
- Vérifier, auprès d'un serveur distant, si une mise à jour de la base de règles est disponible,
- Télécharger la base de règles mise à jour,
- Mettre à jour la base de règles avec la base de règles téléchargée.

L'invention permet d'avoir une base de règles régulièrement mise à jour. De la sorte, le choix d'un moyen communication peut tenir compte de modifications dans l'environnement du véhicule.

Avantageusement, le dispositif de communication pour véhicule selon l'invention, est en outre configuré pour, suite à une communication de données :
- enregistrer des données relatives à la communication,
- transmettre lesdites données au serveur distant.

Cette caractéristique permet au véhicule d'envoyer au serveur des informations sur son environnement et sur le fonctionnement effectif des moyens de communication disponible.

Avantageusement, les données transmises au serveur distant comportent au moins l'une des données suivantes : le moyen de communication utilisé pour la communication, une bande passante, une latence, un taux d'erreur, des données de géolocalisation, indiquant la position du véhicule lors de la transmission, une taille du fichier ou des fichiers transmis.

Avantageusement, le dispositif de communication pour véhicule selon l'invention comporte au moins un des moyens de communication suivant : wifi, réseau cellulaire 2G,3G,4G, 5G LTE, liaison satellite, 802.11p ou autres.

Avantageusement, le dispositif de communication pour véhicule selon l'invention est configuré pour mettre à jour la base de règles lors d'un démarrage du véhicule.

Cette caractéristique permet de disposer d'une base de règles à jour à chaque utilisation du véhicule.

Avantageusement, les données à transmettre comportent un message de sécurité à destination d'une infrastructure ou d'un autre véhicule.

L'invention concerne aussi un procédé de communication pour véhicule, comportant une pluralité de moyens de communication et une base de règles, comportant une étape de détermination d'un moyen de communication à partir de ladite base de règle, caractérisé en ce qu'il est en outre configuré pour :
- Vérifier, auprès d'un serveur distant, si une mise à jour de la base de règles est disponible,
- Télécharger la base de règles mise à jour,
- Mettre à jour la base de règles avec la base de règles téléchargée.

Avantageusement, le procédé de communication pour véhicule selon l'invention comporte en outre des étapes de :
- établissement d'une communication avec un moyen de communication sélectionné,
- enregistrer des données relatives à la communication,
- transmettre lesdites données au serveur distant (103).

L'invention concerne aussi un véhicule caractérisé en ce qu'il comporte un dispositif de communication selon l'invention.

L'invention concerne aussi un système de communication comportant un serveur distant caractérisé en ce qu'il comporte en outre au moins un premier et un deuxième véhicule selon l'invention aptes à communiquer avec ledit serveur distant.

L'invention s'appuie sur un système débarqué, le serveur distant, qui garde chaque communication vers l'extérieur du véhicule et la géolocalise. Cette base des données permet de définir des règles de routage en fonction de l'historique et d'autres paramètres à définir.

La partie embarquée remonte chaque communication faite pour la stocker et télécharge les règles de routage géolocalisé avec une certaine fréquence.

L'intelligence embarquée (autrement dit la base de règles) s'appuie un système débarqué, le serveur distant, qui enregistre les évènements réalisé pour définir les règles de gestion qui sont prises en compte et appliquées dans la partie embarquée.

D'autres caractéristiques et avantages de l'invention apparaîtront à l'examen de la description détaillée ci-après, et des dessins annexés, sur lesquels:
- la figure 1 illustre un système de communication selon l'invention ;
- la figure 2 illustre un logigramme représentant le procédé selon l'invention ;
- la figure 3 illustre un logigramme représentant des sous étapes du procédé selon l'invention.

Les dessins annexés pourront non seulement servir à compléter l'invention, mais aussi contribuer à sa définition, le cas échéant.

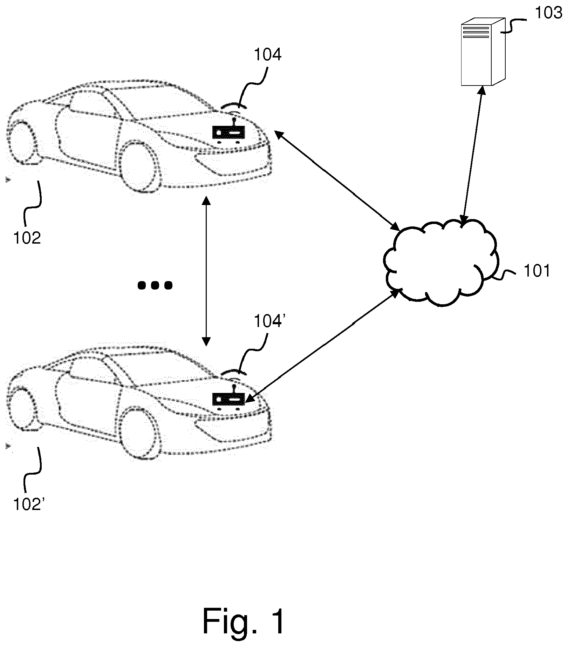

La figure 1 montre un exemple de système de communication selon l'invention.

Le système selon l'invention comporte au moins un premier véhicule 102, un serveur 103 distant communiquant au travers d'un réseau étendu.

Le véhicule 102 comporte au moins un calculateur de bord (non représenté), par exemple un calculateur, comportant au moins un processeur et une mémoire et qui gère un certain nombre d'équipements électriques d'un véhicule et notamment les airbags, les éclairages intérieurs, le verrouillage/déverrouillage des portes et du coffre, le fonctionnement des vitres et de toit ouvrant électriques, le cadencement des essuie-glaces, les temporisations, l'alarme (s'il y a lieu). Il gère également le dialogue entre l'anti-démarrage et le calculateur moteur. Le véhicule 102 comporte aussi un bus de données (non représenté), par exemple un bus de type CAN (pour Controller Area Network) sur lequel une pluralité de calculateurs communiquent à tour de rôle en échangeant des trames de communications.

Chaque trame est identifiée par un code, et contient un ensemble d'informations fonctionnelles. Le véhicule 102 comprend par exemple un calculateur de détection de sous-gonflage émettant des trames donnant l'état de chaque roue (ok, dégonflée, crevée, ...). Ces informations sont exploitées par d'autres organes du véhicule et peuvent notamment être récupérées par un calculateur 104.

Le véhicule 102 comporte aussi un calculateur télématique 104 (aussi appelé dispositif de communication 104) comportant des moyens de communication avec des équipements externes aux véhicules. Le calculateur 104 comprend un module de communication. Il comporte en outre une pluralité de moyens communication permettant d'envoyer et de recevoir des données au serveur 103, par exemple et de façon non exhaustive : wifi, réseau cellulaire 2G,3G,4G, 5G LTE ou liaison satellite 802.11p ou autres.

Selon une caractéristique de l'invention, le dispositif de communication 104 comporte aussi une base de règle. Ledit dispositif de communication est configuré pour déterminer moyen de communication à partir de ladite base de règle.

Le dispositif de communication est aussi configuré pour :
- Vérifier, auprès du serveur 103, si une mise à jour de la base de règle est disponible,
- Télécharger, le cas échéant, la base de règles mise à jour,
- Mettre à jour de la base de règles avec la base de règles téléchargée.

Cette caractéristique permet de modifier simplement et régulièrement la façon dont sont choisies les règles. Cela permet par exemple de modifier les règles pour prendre en compte des événements ponctuels sur un réseau de communication.

Le serveur central 103 est commun à une pluralité de véhicule. Il comprend une base de données pour stocker les données provenant de terminaux. En pratique, le serveur mémorise un certain nombre d'informations relatives au véhicule (par exemple le VIN pour Vehicule Identification Number) et à son propriétaire.

Le serveur est configuré pour mettre à jour la base de règles à partir des données provenant des véhicules 102,102'.

Le véhicule 102 et le serveur débarqué 103 communique via un réseau étendu tel que un réseau de communication fixe 101 (ou WAN pour "Wide Area Network"), par exemple le réseau Internet auquel levéhicule se connecte par une liaison sans fil (3G, 4G,...).

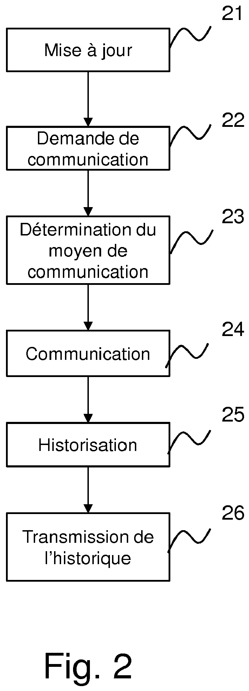

La figure 2 montre un logigramme représentant le procédé selon l'invention. Le procédé selon l'invention comporte une étape de mise à jour 21 de la base de règles.

Le procédé comporte une étape de réception 22 d'une demande de communication, autrement dit d'une trame de données provenant d'un calculateur du véhicule 102 et destiné à être transmise à l'extérieur du véhicule 102.

Le procédé comporte ensuite la détermination 23 d'un moyen de communication à partir de la base de règles. Le dispositif transmet des données contenues dans la trame (par exemple, le type de données à transmettre) au module de sélection.

De façon avantageuse, la détermination d'un moyen de communication prend en compte au moins un des paramètres suivants : un type de communication, prix de la communication, délais, une criticité de l'envoie, une donnée de géolocalisation, Etc.

La criticité de l'envoie indique l'urgence et / ou la nécessité de réaliser rapidement la transmission demandée. La criticité de l'envoie dépend principalement du type de message à transmettre. Par exemple, la transmission d'un message très critique (dit ITS DENM pour Intelligent Transport System Decentralized Environmental Notification Message) implique d'utiliser le moyen de communication le plus rapide, indépendamment d'autre contrainte, par exemple LTE-V (ou 5G) quand il est disponible et s'il n'est pas disponible on utilise le réseau mobile (par exemple 3G).

De façon avantageuse, la sélection tient également compte de la géolocalisation du véhicule.

Par exemple, quand le véhicule détecte le besoin lié à un usage, avant de décider le moyen de communication à prioriser, le dispositif utilise les règles qui sont déjà disponibles localement au véhicule. Ainsi, pour une mise à jour de la cartographie, le taille et la criticité font qu'on va essayer avec le wifi ou le satellite, pour ne pas être trop impacté pour le coût de la communication. Par contre, si on a une mise à jour de sécurité, la base de règle privilégie la vitesse (en terme de bande passant) et sans prendre en compte le coût.

Le procédé comporte ensuite l'établissement 24 d'une communication avec le moyen de communication sélectionné et l'émission des données par l'intermédiaire dudit moyen de communication sélectionné.

De façon avantageuse, le procédé selon l'invention comporte en outre une étape d'historisation 25 de la transmission. Autrement dit, des données relatives à la transmission sont enregistrées dans une mémoire du dispositif.

Le procédé comporte en outre un étape d'émission 26 des données de transmission à destination du serveur distant 103.

De façon avantageuse, les données transmises comportent au moins une des données suivantes :
- la technologie utilisée, la technologie étant par exemple 2G,3G,4G, 5GLTE, Satellite, WIFI,...
- une bande passante, indiquant le débit binaire maximal de voie de transmission (on rappelle que le débit binaire est une quantité de données numériques transmises par unité de temps, exprimée par exemple en kb/s - pour kilobits par seconde ou Mb/s - pour mégabits par seconde),
- une latence, indiquant un délai entre le moment où une information est envoyée et celui où elle est reçue,
- un taux d'erreur, indiquant par exemple taux d'erreur mesuré à la réception d'une transmission numérique et/ou un niveau de perturbation du signal transmis,
- des données de géolocalisation, indiquant la position du véhicule lors de la transmission,
- une taille du fichier (ou des fichiers transmis).

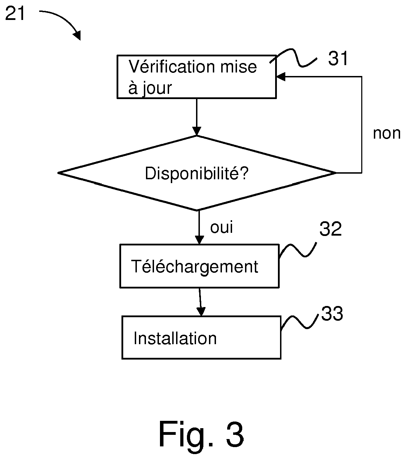

Une première étape représentée figure 3 est une étape consistant à vérifier 31 la disponibilité d'une mise à jour auprès du serveur distant 103. Cette vérification se fait, par exemple, en relevant et comparant des dates de version de la base de règles du dispositif de communication 102 et de la base de règles du serveur distant 103.

Cette étape de comparaison des dates de version permet de savoir si la base de règles embarquées est plus ancienne que la base de règles du serveur distant 103. D'autres méthodes sont possibles, comme par exemple la comparaison de numéro de version.

Cette étape peut être réalisée régulièrement selon une fréquence prédéfinie par exemple de façon quotidienne ou hebdomadaire ou en réponse à un événement par exemple à chaque démarrage ou chaque arrêt du véhicule.

Si une mise à jour est disponible alors le dispositif télécharge 32 le ou les fichier(s) de mise à jour dans une mémoire de stockage par exemple de type eMMC, ou autrement une puce avec une mémoire flash. Mais il pourrait aussi s'agir d'une mémoire de stockage mécanique de type disque dur

L'étape suivante comprend l'installation 33 de la base de règles téléchargées dans le module de décision du dispositif de communication. Lors de l'installation, les nouvelles règles viennent se substituer aux anciennes dans la base de données.

Le dispositif est ensuite prêt à fonctionner avec les nouvelles règles.

## Revendications

1. Dispositif de communication (104, 104') pour véhicule (102, 102'), comportant une pluralité de moyens de communication et une base de règles, ledit dispositif de communication étant configuré pour déterminer un moyen de communication à partir de ladite base de règle, **caractérisé en ce qu'**il est en outre configuré pour :
- Vérifier, auprès d'un serveur distant (103), si une mise à jour de la base de règles est disponible,
- Télécharger la base de règles mise à jour,
- Mettre à jour la base de règles avec la base de règles téléchargée.

2. Dispositif de communication (104, 104') pour véhicule (102, 102') selon la revendication 1, **caractérisé en ce qu'**il est en outre configuré pour, suite à une communication de données :
- enregistrer des données relatives à la communication,
- transmettre lesdites données au serveur distant (103).

3. Dispositif de communication (104, 104') pour véhicule (102, 102') selon la revendication précédente, **caractérisé en ce que** les données transmises au serveur distant (103) comportent au moins l'une des données suivantes : le moyen de communication utilisé pour la communication, une bande passante, une latence, un taux d'erreur, des données de géolocalisation, indiquant la position du véhicule lors de la transmission, une taille du fichier ou des fichiers transmis.

4. Dispositif de communication (104, 104') pour véhicule (102, 102') selon l'une des revendications précédentes, **caractérisé en ce qu'**il comporte au moins un des moyens de communication suivant : wifi, réseau cellulaire 2G,3G,4G, 5G LTE ou liaison satellite.

5. Dispositif de communication (104, 104') pour véhicule (102, 102') selon l'une des revendications précédentes, **caractérisé en ce qu'**il est configuré pour mettre à jour la base de règles lors d'un démarrage du véhicule (102,102').

6. Dispositif de communication (104, 104') pour véhicule (102, 102') selon l'une des revendications précédentes, **caractérisé en ce que** les données à transmettre comporte un message de sécurité à destination d'une infrastructure ou d'un autre véhicule.

7. Procédé de communication pour véhicule (102, 102'), comportant une pluralité de moyens de communication et une base de règles, comportant une étape de détermination (23) d'un moyen de communication à partir de ladite base de règle, **caractérisé en ce qu'**il est en outre configuré pour :
- Vérifier (31), auprès d'un serveur distant (103), si une mise à jour de la base de règles est disponible,
- Télécharger (32) la base de règles mise à jour,
- Mettre à jour (33) la base de règles avec la base de règles téléchargée.

8. Procédé de communication pour véhicule (102, 102'), selon la revendication précédente, **caractérisé en ce qu'**il comporte en outre des étapes de :
- établissement (24) d'une communication avec un moyen de communication sélectionné,
- enregistrer (25) des données relatives à la communication,
- transmettre (26) lesdites données au serveur distant (103).

9. Véhicule **caractérisé en ce qu'**il comporte un dispositif de communication selon l'une des revendications 1 à 6.

10. Système de communication comportant un serveur distant (103) **caractérisé en ce qu'**il comporte en outre au moins un premier (102) et un deuxième (102') véhicule selon la revendication précédente aptes à communiquer avec ledit serveur distant (103).
